# EUROPEAN PATENT APPLICATION

(11) **EP 4 161 171 A1**
(43) Date of publication of application: **05.04.2023**
(21) Application number: 22193804.6
(22) Date of filing: 05.09.2022
(51) Int. Cl.: H04W 56/00, H04W 52/02

(54) **IMPROVING SYNCHRONIZATION**

(30) Priority: 30.09.2021 US 202163250306 P
(71) Applicant: Nokia Technologies Oy, 02610 Espoo (FI)
(72) Inventor: JACOBSEN, Thomas Haaning, 9400 Nørresundby (DK); ABREU, Renato Barbosa, 9000 Aalborg (DK); BARBU, Oana-Elena, 9000 Aalborg (DK); HARREBEK, Johannes, 9000 Aalborg (DK); VEJLGAARD, Benny, 9260 Gistrup (DK); HVIID, Jan Torst, 9270 Klarup (DK)
(74) Representative: Nokia EPO representatives

(57) **Abstract**

There is provided a method, comprising: receiving a configuration for activation and deactivation of a first synchronization mode, wherein the first synchronization mode requires a user equipment to comply with predetermined time synchronization requirements between the user equipment and a network node; detecting, based on the configuration, a trigger to activate the first synchronization mode, and activating the first synchronization mode; determining downlink timing based on a predetermined downlink signal from the network node while the first synchronization mode is activated; applying the determined downlink timing in transmitting at least one up-link signal; detecting, based on the configuration, a trigger to deactivate the first synchronization mode, and deactivating the first synchronization mode.

## Description

### TECHNICAL FIELD

Various example embodiments relate generally to synchronization, and for example to reducing power consumption of a user equipment while still obtaining improved synchronization.

### BACKGROUND

Network synchronization is important for optimal radio network performance. Accurate and reliable time synchronization in the network comprises for example that a base station and a user equipment share a common understanding of a clock time. Finding a balance between accuracy of timing and costs (e.g. power consumption) of obtaining the timing is required.

### BRIEF DESCRIPTION

According to some aspects, there is provided the subject matter of the independent claims. Some further aspects are defined in the dependent claims.

### LIST OF THE DRAWINGS

In the following, the invention will be described in greater detail with reference to the embodiments and the accompanying drawings, in which
Figure 1 presents a network, according to an embodiment;
Figure 2A and 2B show example uses of timing advance, according to some embodiments;
Figure 3 and 4 show methods, according to some embodiments;
Figures 5 and 6 illustrate signaling flow diagrams, according to some embodiments;
Figures 7 and 8 show ways to activate and deactivate the enhanced synchronization mode, according to some embodiments; and
Figures 9 and 10 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "at least one of A or B", "at least one of A and B", "A and/or B" means (A), (B), or (A and B). For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a radio system, such as one comprising at least one of the following radio access technologies (RATs): Worldwide In-teroperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wide-band-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a subcarrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano) satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (12V), or in general to V2X or X2V communications.

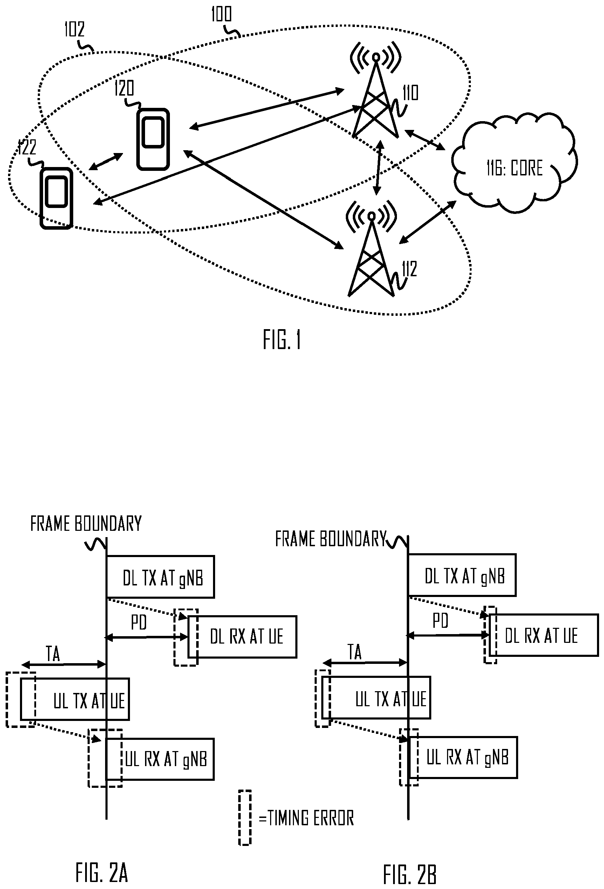

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface Xw may be provided between access points. An interface between an eLTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

Accurate time synchronization was introduced in Release-16 of the 3GPP 5G New Radio specifications in order to support Industrial loT (IIoT) use-cases and, in particular, to support Time Sensitive Networking (TSN) or Time Sensitive Communications (TSC) applications. Time synchronization shall ensure that different nodes of a 5G net-work (e.g. UPF, gNB, UE) share the same Time of Day (ToD) understanding common events, e.g. according to the Coordinated Universal Time (UTC). The work on time synchronization continues in Release-17, where one topics is propagation delay compensation (PDC).

In 5G NR, Synchronization Signal Block (SSB) includes e.g. Primary Synchronization Signal (PSS), which is a physical layer specific signal, that helps UE to get Symbol Boundary and Radio Frame Boundary understanding. It is used by UE for downlink synchronization/timing, which is a process in which the UE detects the Time of Arrival (ToA) and then determines the OFDM symbol boundary (i.e. the timing when an OFDM symbol starts) and/or the radio boundary (i.e. the timing when a radio frame starts).

On the other hand, uplink synchronization/timing comprises UE figuring out the timing when it should send uplink data (i.e. PUSCH / PUCCH). Usually a given gNB is handling multiple UEs and the network has to ensure that the uplink signal from every UE should be aligned with a common receiver timer of the network. This may be at least partially achieved with a time advance (TA) provided to the UE, for example.

Although SSBs may be sufficient for relative radio synchronization (tracking DL PHY timing, for example), in case of absolute time synchronization (to a particular global time domain), more accurate timing information, such as ReferenceTimeInfo-r16 (with a 10ns granularity) may be needed. Due to the dynamic nature of the radio link, it is challenging to deliver time synchronization over a Uu interface from a gNB to a UE. Using the 5G NR control plane, time synchronization information (i.e. gNB time) can be delivered from a gNB to served UEs using two methods: One is a broadcast method where the time information, referenceTimeInfo-r16, is encoded in a SIB9 message. The other is a unicast method where the time information is encoded in a unicast RRC message. In both methods, the encoded time information reference is gNB's clock time that corresponds to the ending boundary of a specific radio system frame (refSFN), where refSFN is indicated to the UE either implicitly (in case of broadcast) or explicitly (in case of unicast). When a UE receives the SIB9 or unicast RRC message, it associates the time information with its estimated refSFN boundary. In this way, underlying 5G radio frame timing at the gNB and at the UE is used as a common reference for delivery of ToD.

A challenge in using the underlying 5G radio frame timing at the gNB and at the UE as a common reference for delivery of ToD is that radio frame boundaries (hence refSFN boundaries) at the gNB and at the UE are not perfectly aligned in time with respect to one another. Downlink frame boundary at the UE is shifted by the propagation delay (PD), i.e. by the time it takes for the radio frame to propagate from the gNB to the UE over the air, with respect to the corresponding frame boundary at the gNB. This is shown in Figure 2A and 2B, where it is shown that the reception of DL transmission at the UE from the gNB is delayed by PD.

Thus, time synchronization may comprise at least two steps, one is determining the timing on the refSFN frame boundary which is related to the referenceTimeInfo and the other is determining the propagation delay estimation (which can be tackled by for example TA, as shown in Figures 2A and 2B).

When a UE synchronizes its clock timing by associating time information carried by SIB9/RRC message with its own refSFN boundary, the UEs understanding of the time of day (ToD) will be delayed by PD compared to gNB's ToD. This may not be an issue if PD is relatively small compared to the maximum allowed timing error (every 10 m of distance adds 33.3 ns of time error between UE's and gNB's clocks due to PD). However, considering that the maximum synchronization error over 5G RAN shall be less than 900 ns in Rel-17 (or 450ns for each Uu interface in a control-to-control scenario) and possibly down to 250ns in Rel-18 and that UE's distance from the gNB may be such that PD alone would introduce a much larger error, mechanisms to compensate for this offset are needed and are in scope for Rel-17 standardization. Therefore, UE needs to compensate the time information received in SIB9 or unicast RRC message for the PD, e.g. by adding its current PD estimate to the time information.

Some PD compensation (PDC) options from RAN1 comprise:
- Option 1: TA-based propagation delay
   - Option 1a: Propagation delay estimation based on legacy timing advance (TA), potentially with enhanced TA indication granularity.
   - Option 1b: Propagation delay estimation based on timing advance enhanced for time synchronization (as 1a but with updated RAN4 requirements to TA adjustment error and Te)
   - Option 1c: Propagation delay estimation based on a new dedicated signaling with finer delay compensation granularity (separated signaling from TA so that TA procedure is not affected)
- Option 2: RTT based delay compensation:
   - Propagation delay estimation based on an RAN managed Rx-Tx procedure intended for time synchronization

Based on option 1b, there may be need to consider whether it is feasible to support a smaller value than the current initial transmit timing error (Te) requirement value defined in Table 7.1.2-1 in TS 38.133 (V17.2.0) for the evaluation of the time synchronization. The time synchronization error caused by Te has been identified as the largest contributor when using timing advance (TA) -based PD estimation, such as in options 1a and 1b.

Although it may be feasible to tighten the Te requirement (i.e. decrease its value), an enhanced Te requirement is likely to have downsides. For example, it may force the gNB to provide the UE the needed reference signals (likely needs to have a higher bandwidth than a commonly used SSB), at any time to enable the UE to comply with the enhanced Te requirement. Further, use of enhanced Te may set new requirements to the accuracy of the UL tracking capability of the DL timing and application of TA to its UL signal.

Value of Te consists of three main elements: DL reference signal timing accuracy (lower bounded by bandwidth occupied by an SSB as minimum requirement), UL internal generation signal accuracy (lower bounded by the minimum supported UL Tx bandwidth), and lastly a UE implementation margin.

The existing Te requirement is designed around the acquisition of an SSB, the UL sampling interval and a UE implementation margin. Compared to LTE, the difference for Te in 5G NR is the introduction of the flexible frame structure with SCS of 15, 30, 60, 120 kHz and, similar to other requirements, it makes sense that Te would also scale with the DL and UL SCS. The UE needs to comply with Te assuming that it acquires DL frame timing from an SSB as the downlink timing reference and is instructed to transmit an UL transmission with the minimum UL bandwidth.

Timing error (Te) mentioned in the PDC options from RAN1 above, refers to "Initial transmission timing error" specified in TS 38.133. The Te requirement implies that the UE has been configured to apply timing advance (TA), i.e. a delay between received DL frame timing and transmitted UL frame timing (see Figure 2A, where TA is applied to adjust the UL reception at the gNB to a required time instant). The existing NR Te requirements may define that UE's initial transmission timing error shall be less than or equal to Te. This requirement applies when it is the first transmission in a DRX cycle for PUCCH, PUSCH and SRS, or it is the PRACH transmission, or it is the msgA transmission. The UE shall meet the Te requirement for an initial transmission provided that at least one SSB is available at the UE during the last 160 ms. The reference point for the UE initial transmit timing control requirement shall be the downlink timing of the reference cell minus (*N*_{TA} + *N*_{TA offset})×*T_{c}*. The downlink timing is defined as the time when the first detected path (in time) of the corresponding downlink frame is received from the reference cell. *N*_{TA} for PRACH is defined as 0. (*N*_{TA} + *N*_{TA offset})×*T*_{c} (in *T*_{c} basic timing units as defined in TS 38.211) for other channels is the difference between UE transmission timing and the downlink timing immediately after when the last timing advance was applied. *N*_{TA} for other channels is not changed until next timing advance is received. The value of *N*_{TA} offset depends on the duplex mode of the cell in which the uplink transmission takes place and the frequency range (FR), and is defined in standard. Te can be considered as an initial timing error, but also, pending on the interpretation of TS 38.133, as a maximum TA error at the UE.

Utilization of an enhanced Te (from now on denoted as Te') might face at least one of these challenges:
- UE using another DL reference than SSB, likely with higher bandwidth (meaning that the UE needs to use a higher sampling frequency).
- UE being forced to increase its UL signal generation frequency (from what is given by the minimum UL bandwidth) due to using a larger IFFT size.
- UE's implementation margin being reduced (due to RAN4 requirements).

All options are likely to influence the UE's power consumption, as they imply the UE to operate with higher sampling frequency (either UL or DL) or implement more advanced/performance critical techniques for TA tracking/filtering/application, even though the requirement for more accurate UL timing may only be needed for whenever PDC is required. The PDC may be required e.g. when a UE has moved from previous position in the cell, and/or by a UE which receives referenceTimeInfo from the serving cell (either a new cell or for same cell, if distance changes). Further, ReferenceTimeInfo-r16 can be delivered down to 80ms periodicities and if delivered in RRC there is no known limitation. It can be anticipated that referenceTimeInfo will be delivered periodically to counteract possible UE clock drift. It may then follow that PDC is done in close time proximity with the delivery of referenceTimeInfo. Therefore, use of enhanced Te (i.e. decreased value of Te compared to that of currently being specified in TS 38.133 (V17.2.0)) may negatively affect the UE's power consumption, if no further enhancement is introduced.

To at least partially tackle this problem, there is proposed a solution for an enhanced Te mode (Te' mode) with a mechanism to configure and activate Te' only when it is needed for PDC and to disable Te' again when the PDC procedure is completed. In other words, only when the Te' mode is active the UE complies with the Te' which means that the UE must perform DL time tracking (DL timing) based on a DL signal of a likely higher bandwidth than the SSB (e.g. CSR-RS or PRS) which is provided by the gNB and reflect this enhanced timing to its UL transmission(s). Depending on how Te' is specified, it might also affect the required UL sampling interval, such that the UE's UL transmission timing error shall be less than or equal to Te'. With the current proposal, the afore-mentioned power consuming procedures are applicable only when the Te' mode is active, while when the Te' mode is deactivated, the UE is not forced to apply these power consuming procedures. This may beneficially limit air interface resources and reduce UE power consumption spent on complying with the enhanced Te.

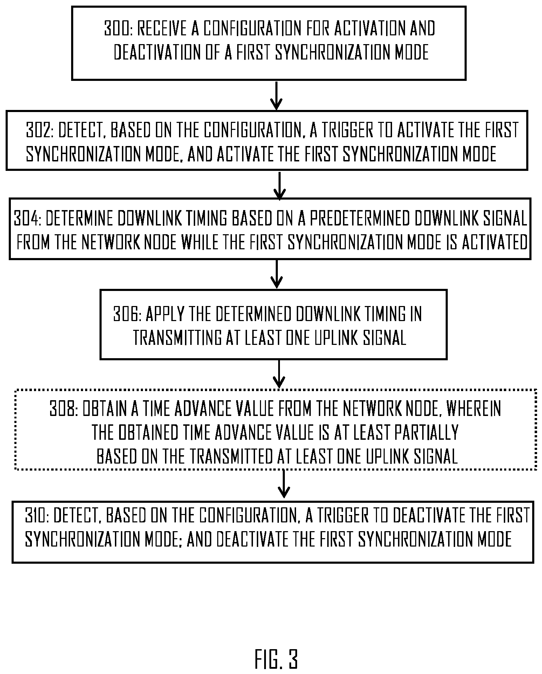

Figure 3 depicts an example method. The method may be performed by a user equipment, such as the UE 120 of Figure 1. Accordingly, as shown in Figure 3, the UE 120 in step 300 receives a configuration for activation and deactivation of a first synchronization (sync.) mode. The first synchronization mode may be also called an enhanced synchronization mode, enhanced Te mode, or Te' mode. The configuration may indicate at least when the UE should activate the Te' mode and when the UE should deactivate the Te' mode

The first synchronization mode is associated with predetermined time synchronization requirements between the UE 120 and a network node, such as the gNB 110. These predetermined time synchronization conditions/requirements may be more stringent than in a second synchronization mode (also called a legacy synchronization mode, a normal synchronization mode, or a synchronization mode that is valid when the first synchronization mode is deactivated). The predetermined time synchronization requirements, which the user equipment is required to comply with while the first synchronization mode is activated, are more stringent than while the first synchronization mode is deactivated. The more stringent time synchronization requirements may be due to application of Te'. The more stringent time synchronization requirements may cause or require the UE to operate differently for the reception of DL signals and/or for transmission of UL signals while in the first synchronization mode. For example, the UE 120 may use a higher downlink sampling rate for detecting DL signal(s) and/or a higher uplink sampling rate for transmitting UL signal(s), than the UE would use if the first synchronization mode was deactivated.

In step 302, the UE 120 detects, based on the configuration, a trigger to activate the first synchronization mode, and activates the first synchronization mode based on the detection. In an embodiment this may denote that the second synchronization mode is deactivated when the first one is activated. There are various options on what is the configured trigger to activate the first synchronization mode.

In step 304, the UE 120 determines downlink timing based on a predetermined DL signal from the gNB 110 while the first synchronization mode is activated. In an embodiment, the predetermined downlink signal occupies a higher bandwidth than a synchronization signal block (SSB). This may enable detection of the first path's time of arrival (TOA) more accurately than what would be possible with an SSB. It may be noted here that the UE 120 may constantly track coarse (symbol level timing) and fine timing (e.g. first path of arrival) for exact knowledge of when to start sampling to receive the desired symbols. The higher bandwidth, the higher FFT size is generally needed for accurate channel demodulation and the faster the UE is sampling. The faster the UE is sampling the more accurately it can detect the first path of arrival either directly in time domain or in frequency domain by calculating the channel impulse response. By a simple rule of thumb, the timing accuracy is inversely proportional to the bandwidth, so an SSB having a bandwidth close to 4 MHz this gives a timing accuracy around 250ns, whereas if the predetermined DL signal occupies 10MHz, the timing accuracy improves to around 100ns.

The DL timing comprises determining the radio boundary (i.e. the timing when a radio frame starts). In an embedment, the UE 120 determines when the symbol starts/ends and then the UE may extrapolate to detect when the frame starts/ends. This may be done, in an embodiment, with more accuracy than in the second synchronization mode or when the first mode is deactivated. To achieve the higher accuracy for DL timing, the UE may apply a time of arrival detection at least for the detection of the predetermined downlink signal with a higher downlink sampling rate than a downlink sampling rate used when the first synchronization mode is deactivated. I.e. the downlink sampling rate is increased during the first synchronization mode compared to the second synchronization mode. The change in the downlink sampling rate may be from e.g. 7,68MHz to 30,72MHz as what would correspond to receiving an SSB with 15kHz (1 sample per subcarrier per symbol) and then what is needed to receive a e.g. 20MHz RS.

In an embodiment, the UE 120 gradually adjusts DL timing to comply with predetermined synchronization requirements of the first synchronization mode. For example, when the transmission timing error between the UE and the reference timing exceeds ±Tₑ then the UE is required to adjust its timing to within ±Tₑ. The reference timing shall be (*N*_{TA} + *N*_{TA offset})×*T*_{c} before the downlink timing of the reference cell.

Some examples of the predetermined DL signal comprise a channel state information reference signal (CSI-RS), a tracking reference signal (TRS), or a positioning reference signal (PRS), or another reference signal (RS), such as demodulation reference signal (DMRS). In an embodiment, the predetermined DL signal with the higher bandwidth may be sent only when the UE 120 is in the Te' mode.

In step 306, the UE 120 applies the determined downlink timing in transmitting at least one uplink signal. In an embodiment, the UL signal may be e.g. sounding reference signal (SRS) or another specified reference signal (RS). Alternatively, or additionally, the predetermined UL signal may comprise a PUCCH and/or PUSCH signal. The configuration received in step 300 may indicate the UL signal or signals on which the determined DL timing is to be applied, or the UE 120 may apply the determined DL timing to every UL transmission or UE selected uplink transmission, at least during the first synchronization mode is active.

In an embodiment, the UL signal(s) on which the determined DL timing is to be applied is/are configured to occupy a higher bandwidth while in the first synchronization mode. The UL resources for the transmission of the UL signal(s) may be provided in an UL grant from the gNB 110 in the configuration or in a separate UL grant message.

In an embodiment, the UE 120 generates the at least one uplink signal with a higher uplink sampling rate than an uplink sampling rate used when the first synchronization mode is deactivated. Thus, the first mode may affect the required UL sampling interval. The used uplink sampling rate may be associated with IFFT size used to generate the UL signal.

In an ideal case, the TA applied to advance the UL transmission would be such that the UL signal would reach the receiver at the frame boundary. However, as shown in Figure 2A, due to errors (marked with dashed blocks) in the detected TOA at the UE, the DL timing determination may be slightly erroneous (e.g. due to the limited sampling granularity, limited FFT size and possible multipath channel), and the UL transmission takes place at a slightly suboptimal time instant (e.g. due to the UE hardware and software implementations). To overcome this, the UE may apply the more accurate DL timing determined in the previous step to the UL transmission(s). This is shown in Figure 2B, where the timing error blocs are smaller. Thus, applying of the DL timing on the UL transmission may comprise determining UL transmission time at least partly based on the determined DL timing and a current TA value. The UE determines the UL transmission time relative to the perceived DL timing modified by an offset of the current TA value. That means that the accuracy of the DL timing directly influences the UL transmission time. As the DL timing is now more accurate, the reception of the UL signal at the gNB 110 is more in-line with the frame timing at the gNB, as shown in Figure 2B. It is noted that the Te requirement is tested over the air interface, and hence is also impacted by the accuracy of the UL transmission. Thus, the Te requirement is a function of both UL and DL frame timing accuracies.

In an embodiment, the UE applies the determined downlink timing also to UL transmissions after deactivating the first synchronization mode, whereas in another embodiment, the UE returns to less strict DL/UL timing requirements of the second synchronization mode when deactivating the first synchronization mode.

In an optional step 308, the UE 120 obtains a TA value from the gNB 110, wherein the obtained TA is based on the transmitted at least one predetermined UL signal. That is, the gNB 110 may determine the TOA of the UL signal at the gNB 110, and then estimate the time offset between UL TOA and DL frame timing (i.e. frame boundary), and this offset may be used to calculate a more accurate TA value. After receiving the new TA from the gNB 110, the UE 120 may update the existing TA value based on the newly received TA value. As such, in following signaling, the more accurate TA value may be used even after deactivating the first synchronization mode. This step 308 may be optional. In some cases, the TA need not be updated, and in such case the UE need not receive a new TA value from the network.

In step 310, the UE 120 detects, based on the configuration, a trigger to deactivate the first synchronization mode, and deactivates the first synchronization mode. Substantially at the same time, the UE 120 may trigger the second synchronization mode on. This may allow the UE to save power, as the second synchronization mode may not require the UE to apply the higher sampling rates and may save signaling resources as the second synchronization mode may not require the signal(s) to occupy higher bandwidth.

In this manner, during the enhanced mode, the UE 120 applies increased sampling rate for the particular wider bandwidth DL signal sent by the gNB 110, and then applies the more accurate DL timing at least once for an UL transmission, so that the gNB 110 can derive more accurate TA value for the UE 120.

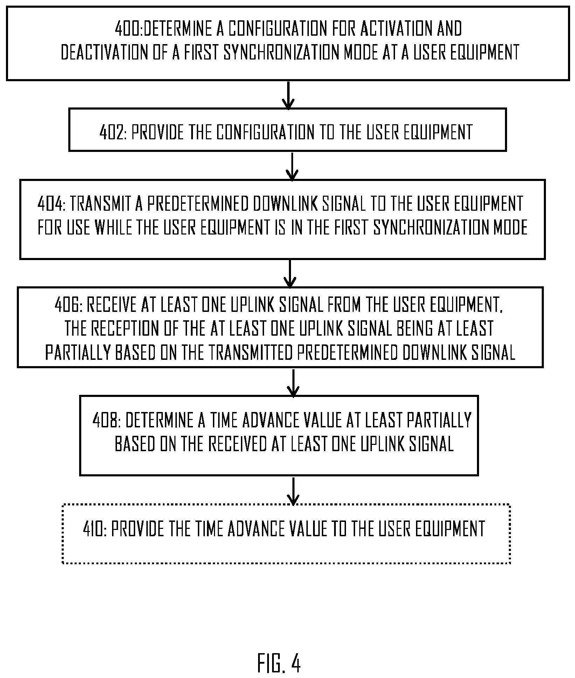

Looking from the point of view of the network node, such as the gNB 110, Figure 4 shows a method performed by the gNB 110.

The method comprises in step 400 determining the configuration for activation and deactivation of the first synchronization mode at the UE. In step 402, the gNB 110 provides the configuration to the UE 120. As said, the first synchronization mode is associated with predetermined time synchronization requirements between the UE 120 and the gNB 110. In addition to the more stringent time synchronization requirements causing the UE to operate differently for the reception of DL signals and/or for transmission of UL signals while in the first synchronization mode, the gNB 110 may be caused or required, while in the first synchronization mode, to transmit a DL signal with a higher bandwidth and/or use a higher DL sampling rate for the transmission of the DL signal, compared to when the first synchronization mode is deactivated. The gNB 110 may optionally also use a higher sampling rate for the detection of UL signal(s) while in the first synchronization mode, compared to the when the first synchronization mode is deactivated. Thus, the first synchronization mode may further require different behaviour on the gNB 110 side, so that the gNB can also comply with the more stringent timing requirements. In an embodiment, the first synchronization mode is also activated and deactivated at the gNB 110, when the UE 120 is triggered to activate or deactivate the first synchronization mode, respectively.

In step 404, the gNB 110 transmits a predetermined DL signal to the UE. The predetermined downlink signal may be used by the UE 120 while the UE is in the first synchronization mode. The UE may then perform the step 304 of Figure 3. In step 406, the gNB 110 receives at least one predetermined UL signal from the UE (i.e. the one(s) sent by the UE in step 306 of Figure 3). The reception time of the UL signal(s) is at least partially based on the transmitted DL signal of step 404.

In step 408, the gNB 110 determines a TA value at least partially based on the received at least one UL signal, and in step 410 provides the TA value to the UE 120. This step 410 is optional. In some cases, the determined TA is not different enough from the existing TA value, and in such case, it need not be updated, and the gNB 110 need not send the determined TA value to the UE 120.

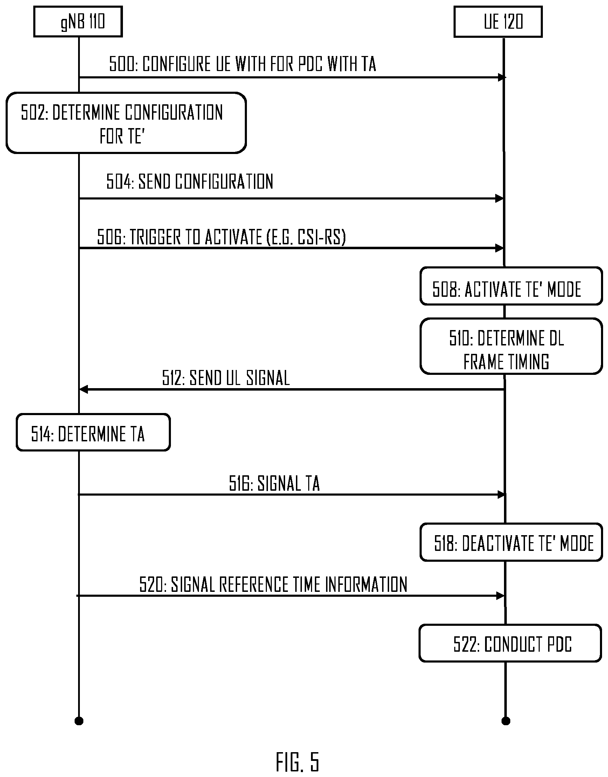

Let us take a closer look at an embodiment depicted in signaling flow diagram of Figure 5. In step 500 UE 120 may be configured for TA-based PDC by the gNB 110. This may comprise the gNB determining that PDC is needed, e.g. meet the desired time synchronization error budget for the time synchronization service, the gNB to configure the UE to conduct PDC, and the gNB to configure the UE to apply TA/2 (not including offsetNTA) as its PD estimate (using the first or second time synchronization mode), the UE to subtract TA/2 to its absolute timestamp from referenceTimeInfo when this is received and the UE providing this compensated timestamp to higher layers and/or local phased locked loop tracking ToD. OffsetNTA here is for TDD operations to capture the timing offset between UL and DL symbols that is not a part of the propagation delay round trip time, but captures switching times, guard periods, frame structure offsets, etc.

In step 502, the gNB 110 determines the configuration for the first synchronization mode. The configuration may comprise at least the activation criteria (here it is when the UE receives DL RS, but this is merely one option, as will be described later) and the deactivation criteria (here the UE 120 deactivates the mode when it receives an enhanced TA granularity command, but other options are possible, as will be described later). The gNB 110 may also determine, for the configuration and at least in this specific example of Figure 5, the predetermined DL RS that is to be used for the Te' mode. This predetermined DL signal may comprise, for example, CSI-RS for tracking (TRS) with 10MHz bandwidth, identified by a CSI-RS configuration ID (denoted csi-ResourceConfigId). The gNB 110 may further determine, for the configuration and at least in this specific example of Figure 5, the predetermined UL signal on which the UE applies the Te' and more accurate DL timing. This UL signal can be e.g. sounding reference signal (SRS).

In step 504, the gNB 110 transmits the configuration to the UE 120. This can be sent as MAC or RRC signaling, for example.

In step 506, the gNB 110 transmits and the UE 120 receives the dedicated DL signal, e.g. DL RS associated with Te'. In this example, this triggers the activation of the enhanced Te mode at the UE 120 in step 508. The UE would be configured to receive CSI-RS (as an example) and by configuration the UE 120 may know that it needs to activate the enhanced Te mode when receiving this. That means that the enhanced Te mode applies with the CSI-RS signal. Consequently, the UE 120 may apply the increased DL sampling rate in the reception of the DL signal, and in this way determine in step 510 the DL timing more accurately than if the first mode was deactivated.

In an embodiment, the configuration received in step 504 further comprises an indication of the predetermined downlink signal.

Next, in step 512, the UE 120 transmits a predetermined UL signal. The UE, having activated the Te' mode, complies with stricter timing error Te' requirement when transmitting the UL signal. This may comprise the UE 120 applying the determined DL timing on the transmission time of the UL signal, and the UE applying increased UL sampling rate. In an embodiment, these more stringent UL transmission criteria may apply to all subsequent UL transmissions which apply TA, until the Te' mode is disabled. These may comprise transmissions on PUSCH, PUCCH and SRS, for example. In an embodiment, the configuration received in step 504 comprises an indication of the at least one uplink signal for which the determined downlink timing is to be applied.

In step 514, the gNB 110, after receiving the UL signal in step 512, estimates the timing offset between UL TOA and DL frame timing. This may be then used in calculation of the TA value. The gNB 110 may then determine if an adjustment in the UE's current TA value is needed or not.

If it is needed, the gNB 110 in step 516 signals TA to the UE 120. The TA may have enhanced accuracy because of more time accurate performance of the UE in the detection of the DL signal in step 506 and/or in the transmission of the UL signal in step 512, and also possibly because the gNB 110 may also be configured to sample the UL signal transmitted in step 512 with an increased sampling rate compared to when the first synchronization mode is deactivated. In an embodiment, there is a legacy TA command and an enhanced TA command available for transmission to the UE. When the first synchronization mode is activated at the UE 120 (and possibly at the gNB 110), the gNB 110 may decide to transmit the enhanced TA command. When the first synchronization mode is deactivated at the UE 120 (and possibly at the gNB 110), the gNB 110 may decide to transmit the legacy TA command. In an embodiment, it is specified when the enhanced TA command is used. E.g. a TA command received when the first mode is active is by default with the enhanced TA granularity. Then, the UE 120 may update its current TA value based on the newly received value.

In step 518, the UE 120 disables the Te' mode, meaning that the UE 120 does not have to comply with Te' anymore and can resume normal operation (e.g. second synchronization mode). In this example, the deactivation of the Te' mode takes place at the obtaining of the new TA value. If signaling the new TA value is not needed, the gNB may use another means, such as implicit signaling, to deactivate the Te' mode.

Optionally, the gNB 110 may further signal referenceTimeInfo to the UE 120 in step 520. This referenceTimeInfo may comprise indication of gNB's clock time that corresponds to the ending boundary of a specific radio system frame (refSFN). When the UE 120 receives the referenceTimeInfo, the UE 120 associates the time information with its own refSFN boundary. Thereafter, in step 522, the UE 120 applies PDC using TA/2 (without offsetNTA), and conducts PDC on the referenceTimeInfo.

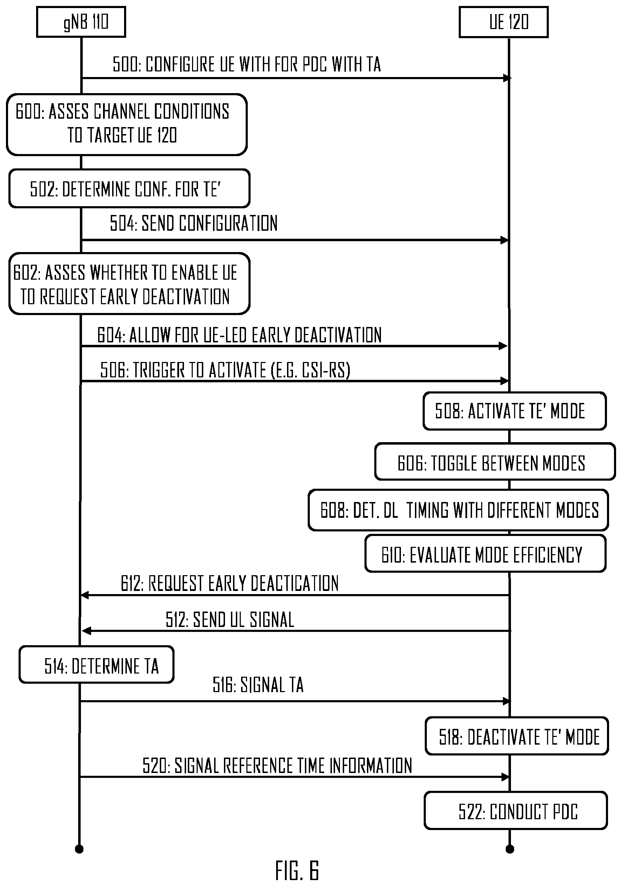

Figure 6 shows another signaling flow diagram. Figure 6 shows some optional embodiments. The reference numerals that are the same in Figures 5 and 6 represent same functions. The functions of these blocks in Figure 6 will not be explained again in connection of Figure 6, but the reader will find those above in description of Figure 5.

In an embodiment of Figure 6, the gNB 110 may in step 600 determine channel conditions between the gNB 110 and the UE 120, and decide based on that determination whether to enable activation of the first synchronization mode at the UE. For example, before enabling the Te' mode, the gNB 110 may assess channel conditions towards the UE 120. The determination of the channel conditions may be based on measuring uplink signals, such as SRS, PUSCH and/or PUCCH. If the gNB concludes the SNR/SINR to the target UE 120 is below a certain threshold (e.g. in case the UE 120 is at cell edge or severely interfered), the gNB 110 may not trigger the enhanced Te mode, since it is expected that the UE cannot benefit from it. In other words, the conditions are assessed to be too poor for the UE 120 to benefit from the higher bandwidth reference signals. In such case, the rest of the steps in the signaling flow diagram of Figure 6 may not take place.

In an embodiment, the gNB 110 may in step 602 decide to enable early deactivation request of the first synchronization mode at the UE 120 when a predetermined condition is met (at the UE). For example, the gNB 110 may assess in this step whether the UE 120 can be enabled to request an early deactivation of the Te' mode, e.g. when the UE 120 e.g. experiences power shortage, and/or concludes that the Te' mode was not beneficial in reducing the error. The assessment at the gNB 110 may be based on at least one of the following: the UE type, UE processing capabilities (e.g. in case the UE reported advanced processing availability, the UE can be enabled with this functionality of requesting early deactivation), or UE channel conditions (e.g. a fast moving UE should be allowed to request an early deactivation, if the UE 120 cannot support fast enough spatial Te adaptation).

In step 604, the UE 120 is provided with an indication that early deactivation request is allowed when the predetermined condition is met at the UE 120, and the UE 120 may thus receive, from the gNB 110, a permission for requesting deactivation of the first synchronization mode based on detection of a predetermined condition. If the assessment in step 602 is that the UE should not be allowed to request early deactivation, then the signaling of steps 604 and 612 would not take place.

Thereafter, if the UE 120 at some point determines that the predetermined condition is met (e.g. experiences power shortage, and/or concludes that the Te' mode was not beneficial in reducing the error in step 610), the UE 120 may then in an embodiment explicitly request the termination via a binary flag, e.g. deactivation_req = 1 transmitted in step 612 from the UE 120 to the gNB 110 (as being instructed in step 604). In another embodiment, the UE 120 may in such situation transfer a measurement representing the condition, such as a metric indicating mode efficiency, to the gNB 110. E.g. the UE may be requested in step 604 to compute and report in step 612 to the gNB 110 the difference between the TOA based on SSB and that based on the CSI-RS. Then the gNB 110 may evaluate the measurement and may take the decision to deactivate the Te' mode early. The location of arrow 612 in the Figure 6 is merely an example and the early deactivation may take place at any time after being permitted.

In yet one embodiment shown in Figure 6 in steps 606-610, the UE, which may be equipped with more than one TOA determination method, may decide to toggle between the available TOA determination methods (e.g. based on UE's own past CSI information). These may comprise e.g. standard method (low-power, low complexity) which may be e.g. cross-correlation based, and an advanced method which may comprise e.g. compressed sensing, oversampling. This is shown with step 606, where the UE may switch between the two (or more) modes.

The UE 120 may then in step 608 determine the difference between the downlink timing obtained with the standard method and the downlink timing obtained with the advanced method. Based on the difference, the UE 120 may in step 610 evaluate mode efficiency, e.g. between standard TOA method and advanced TOA method.

In an optional step 612, the UE 120 may request the deactivation of the first synchronization mode based on determining that the downlink timing obtained with the first synchronization mode is less than a predetermined threshold improved over the downlink timing obtained with the second synchronization mode. This threshold, as any other thresholds depicted in the description, may be based on simulations or empirical testing, for example.

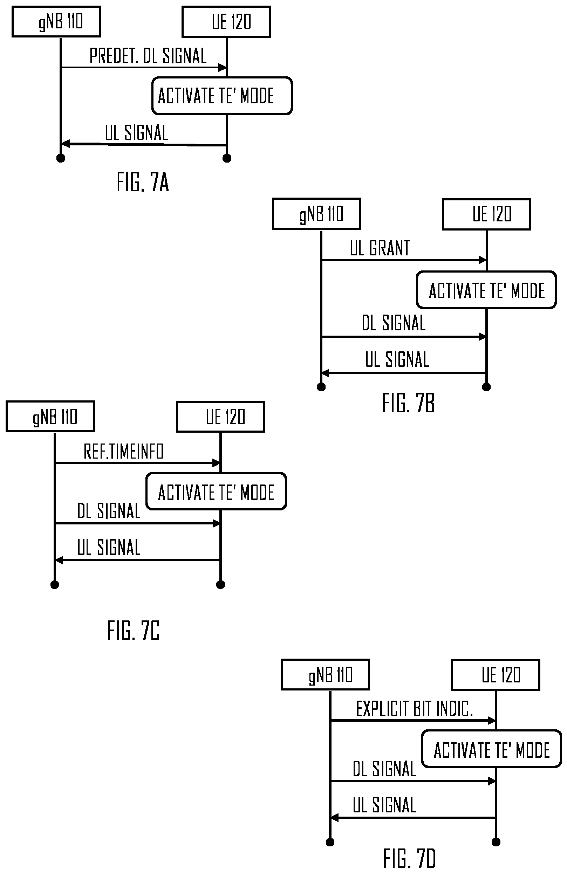

Let us then look at options for activating the enhanced Te mode (first synchronization mode). Figures 7A-7D depict embodiments for the activation of Te' mode. These may comprise:
- Option A1 (depicted in Figure 7A): UE receiving a dedicated DL signal, as in Figures 5 and 6. The dedicated DL signal may be e.g. CSI-RS, TRS, or PRS, identified to be used for Te' mode by the configuration determined in step 502 (e.g. via RRC). This option may allow the UE 120 to exactly identify which DL signal is used as a basis for DL time tracking to comply with Te'. In this embodiment, the trigger to activate the first synchronization mode comprises the detection of the predetermined downlink signal.
- Option A2 (depicted in Figure 7B): The UE 120 being scheduled with a predetermined UL signal (e.g. SRS or other type of RS) identified to be used for the PDC by the configuration. In this embodiment, the trigger to activate the first synchronization mode comprises detecting an uplink grant for the at least one uplink signal. It may be left for gNB implementation to specify a DL RS signal which allows the UE 120 to comply with the Te' requirement, in advance of the UL signal transmission. In other words, the UE can meet the Te' requirement for the UL signal transmission provided that at least one high bandwidth DL signal is available at the UE during the last T ms, where T represents a timer value.
- Option A3 (depicted in Figure 7A): The UE being configured with a predetermined dedicated UL and DL RS used for Te' mode. Thus, in this embodiment, similarly to option A1 above, the trigger to activate the first synchronization mode comprises the detection of a predetermined DL signal. This means that the UE knows which DL RS to use for the timing determination for the UL RS transmission, where Te' is applied. In this option Te' requirements can be associated with this UL-DL signal combination directly. For example, the gNB 110 may determine in step 400 the configuration to comprise an indication of at least one UL-DL signal -pair for which the first synchronization mode is to be applied, such that the DL timing is determined based on the DL signal of the UL-DL signal -pair and the determined DL timing is applied on the UL signal of the UL-DL signal -pair.
- Option A4 (depicted in Figure 7C): UE receiving referenceTimeInfo. Thus, in this embodiment, the trigger to activate the first synchronization mode comprises receiving an indication of a time that corresponds to the ending boundary of a specific radio system frame at the network node. This can be used to denote the start of the Te' mode, and then it may be up to gNB implementation to provide the UE with a DL signal and a UL grant for a sufficiently accurate PDC. The UE shall meet the Te' requirement for the UL transmission provided that at least one high bandwidth DL signal is available at the UE during the last T ms and possible after referenceTimeInfo is received.
- Option A5 (depicted in Figure 7D): UE receiving an explicit activation signal. In this embodiment, the trigger to activate the first synchronization mode comprises receiving an explicit indication to activate the first synchronization mode. The explicit indication may comprise e.g. a single bit signalled from the gNB 110 to enable Te' mode, e.g. by RRC or by a MAC CE.

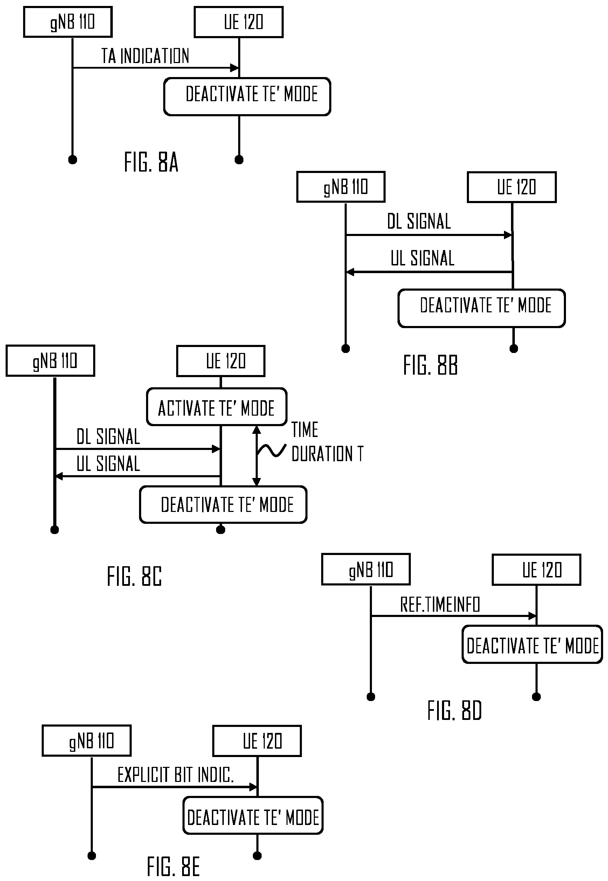

Figures 8A-8E depict embodiments of deactivation of the Te' mode. These may comprise:
- Option D1 (depicted in Figure 8A): UE receiving a TA command, e.g. with the enhanced granularity. In this embodiment, which is also depicted in Figures 5 and 6, the trigger to deactivate the first synchronization mode comprises obtaining the TA value. This is suitable for all activation mechanisms above.
- Option D2 (depicted in Figure 8B): UE receiving at least one DL RS and transmitting at least one UL RS after Te' mode activation. In other words, in this embodiment, the trigger to deactivate the first synchronization mode comprises completing the detection of the predetermined DL signal and the transmission of the at least one UL signal. This is suitable for all activation mechanisms above.
   ∘ In an embodiment, when paired with Option A1, the next UL transmission after the detection of the DL signal may be considered to be the one that disables the Te' mode.
   ∘ In an embodiment, when paired with Option A2, it can be specified that the UL transmission corresponding to the UL grant is the one that deactivates the Te' mode, or the next UL transmission within the configuration (e.g. P-SRS).
   ∘ In an embodiment, Option D2 is paired with Option A3. Then, the UE 120 receives an exact indication of the UL-DL signal pair, where the transmission of the UL signal disables the TE' mode.
- Option D3 (depicted in Figure 8C): UE detecting an expiry of a time window. In this embodiment, the trigger to deactivate the first synchronization mode comprises expiration of a predetermined time duration after activating the first synchronization mode. Within this time window, the UE 120 may comply with Te' on all UL transmissions. This is suitable for all activation mechanisms above.
- Option D4 (depicted in Figure 8D): UE receiving referenceTimeInfo. In this embodiment, the trigger to deactivate the first synchronization mode comprises receiving an indication of a time that corresponds to the ending boundary of a specific radio system frame at the network node. The UE 120 may terminate the ending by delivery of referenceTimeInfo (RTI), which may serve as the timestamp to which PDC is applied. This option may be suitable at least with Options A1, A2, A3, and A5
- Option D5 (depicted in Figure 8E): UE receiving an explicit deactivation. In this embodiment, the trigger to deactivate the first synchronization mode comprises receiving an explicit indication to deactivate the first synchronization mode. This indication may be e.g. a 1 bit signal to deactivate the Te' mode. This is suitable for all activation mechanisms above.

Each of the activation and/or deactivation embodiments/options may be configured to the UE via the configuration is step 504. That is, the gNB 110 may decide which options to use, and then configure the UE 120 with the selected options. In some embodiments, the gNB 110 is in control of the activation e.g. by sending the predetermined DL signal, UL grant, referenceTimeInfo or the explicit indication, and in control of the deactivation e.g. by sending the TA command, referenceTimeInf, or the explicit indication, or by configuring the timer value or the UL grant for the UL signal transmission. The options above are not mutually exclusive.

In an embodiment, the proposal applies to gNB-side PDC. In another embodiment, the proposal applies to UE-side PDC.

In an embodiment the first synchronization mode is applied only for the purposes of propagation delay compensation (PDC), i.e. when PDC is required or needed. However, it is difficult to specify when the PDC procedure starts/stops. The UE 120 may not necessarily know when the PDC procedure starts/stops, as it is most likely a constant running dynamic process. Thus, the proposal uses the activation and deactivation mechanisms, that can then be aligned with the PDC procedure.

It is noted though that e.g. the activation mechanism A5 and deactivation mechanism D5 may be used also if Te' mode is needed for other purposes than PDC, e.g. to force the UE to use a higher bandwidth DL RS for DL timing, which potentially can enhance the UE hold-over capability (timing precision between receptions of ToA). Thus, the gNB 120 may decide when to trigger the activation of the first mode and it may be an implementation specific decision.

Some benefits of the proposed solution may comprise decreased UE power consumption. Furthermore, the enhanced TA with Te' mode enables TA-based PDC for challenging time synchronization use cases, while taking the benefits from the existing TA mechanism and avoiding the drawbacks from having to comply with Te' at all times.

One possible implementation to the standard specifics may comprise specifying a new IE to activate PDC, a configured Te' Mode and in this example case, also the associated CSI-RS resource configuration ID. Other alternative DL RS signals can also be considered, such as PRS. In that case, the association is made with a DL-PRS-ResourceID.

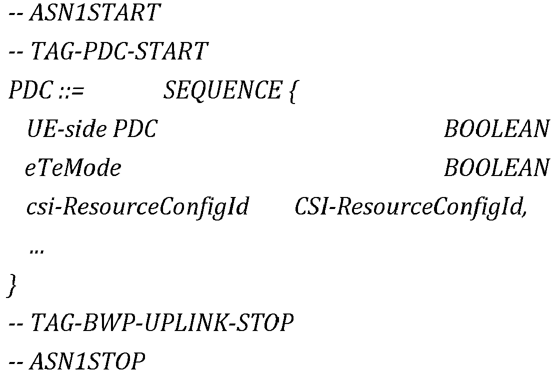

An example Te' performance requirement could be as specified as below in 7.1.2-1 of TS 38.133.

| **Frequency Range** | **SCS of RS (kHz)** | **BW of downlink signals (MHz)** | **BW of uplink signals (MHz)** | **Te** |
|---|---|---|---|---|
| 1 | 15 | 5 | 5 | 10*64*T_{c} |
| | | 10 | 5 | 6*64*T_{c} |
| | | 20 | 10 | 2*64*T_{c} |
| | 30 | 5 | 5 | 7*64*T_{c} |
| | | 10 | 5 | 3*64*T_{c} |
| | | 20 | 10 | 2*64*T_{c} |
| | Note 1: T_{c} is the basic timing unit | | | |

### Example of Enhanced Te Timing Error Limit

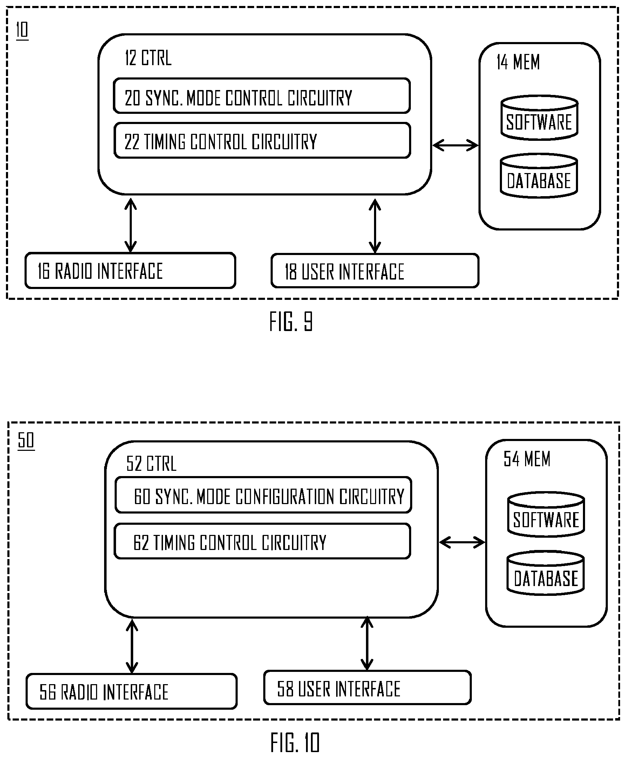

An embodiment, as shown in Figure 9, provides an apparatus 10 comprising a control circuitry (CTRL) 12, such as at least one processor, and at least one memory 14 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute some of the functionalities of the above described processes, such as the steps of Figure 3.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise a synchronization mode control circuitry 20 for determining which configuration to use at a given time, according to any of the embodiments. The control circuitry 12 may further comprise a timing control circuitry 22 e.g. for determining the DL timing and UL transmission time, according to any of the embodiments.

An embodiment, as shown in Figure 10, provides an apparatus 50 comprising a control circuitry (CTRL) 52, such as at least one processor, and at least one memory 54 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may be or be comprised in a network node, such as in gNB/gNB-CU/gNB-DU of 5G. In an embodiment, the apparatus is or is comprised in the network node 110. The apparatus may be caused to execute some of the functionalities of the above described processes, such as the steps of Figure 4.

In an embodiment, a CU-DU (central unit - distributed unit) architecture is implemented. In such case the apparatus 50 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be stand-alone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit. In an embodiment, the execution of at least some of the functionalities of the apparatus 50 may be shared between two physically separate devices (DU and CU) forming one operational entity. Therefore, the apparatus may be seen to depict the operational entity comprising one or more physically separate devices for executing at least some of the described processes. In an embodiment, the apparatus controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to access the radio access net-work, for example. The apparatus may also comprise a user interface 58 comprising, for example, at least one keypad, a microphone, a touch display, a display, a speaker, etc. The user interface may be used to control the apparatus by the user.

The control circuitry 52 may comprise a synchronization mode configuration circuitry 60 for determining the configuration with respect to switching between synchronization modes, according to any of the embodiments. The control circuitry 52 may comprise a timing control circuitry 62 e.g. for determining timing advance for the UE.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry.

As used herein the term "means" is to be construed in singular form, i.e. referring to a single element, or in plural form, i.e. referring to a combination of single elements. Terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Following is a list of some aspects of the invention.

According to a first aspect, there is provided a method, comprising: receiving a configuration for activation and deactivation of a first synchronization mode, wherein the first synchronization mode requires a user equipment to comply with predetermined time synchronization requirements between the user equipment and a network node; detecting, based on the configuration, a trigger to activate the first synchronization mode, and activating the first synchronization mode; determining downlink timing based on a predetermined downlink signal from the network node while the first synchronization mode is activated; applying the determined downlink timing in transmitting at least one uplink signal; detecting, based on the configuration, a trigger to deactivate the first synchronization mode, and deactivating the first synchronization mode.

Various embodiments of the first aspect may comprise at least one feature from the following bulleted list:
- the first synchronization mode is applied for the purposes of propagation delay compensation.
- wherein activating the first synchronization mode comprises applying a time of arrival detection at least for the detection of the predetermined downlink signal with a higher downlink sampling rate than a downlink sampling rate used when the first synchronization mode is deactivated.
- wherein applying the determined downlink timing in the at least one uplink signal comprises determining uplink transmission time at least partly based on the determined downlink timing and a current time advance value.
- generating the at least one uplink signal during the first synchronization mode with a higher uplink sampling rate than an uplink sampling rate used when the first synchronization mode is deactivated.
- obtaining a time advance value from the network node, wherein the obtained time advance value is at least partially based on the transmitted at least one uplink signal; updating the existing time advance value based on the obtained time advance value.
- gradually adjusting timing to comply with predetermined synchronization requirements of the first synchronization mode.
- wherein the predetermined downlink signal occupies a higher bandwidth than a synchronization signal block.
- wherein the predetermined downlink signal is one of a channel state information reference signal, a tracking reference signal, or a positioning reference signal, a demodulation reference signal.
- wherein the at least one uplink signal comprises a sounding reference signal.
- receiving, from the network node, a permission for requesting deactivation of the first synchronization mode based on detection of a predetermined condition; detecting the predetermined condition; and requesting for the deactivation of the first synchronization mode.
- determining the difference between the downlink timing obtained with the first synchronization mode and the downlink timing obtained when the first synchronization mode is deactivated; and requesting deactivation of the first synchronization mode based on determining that the downlink timing obtained with the first synchronization mode is less than a predetermined threshold improved over the downlink timing obtained when the first synchronization mode is deactivated.
- wherein the trigger to activate the first synchronization mode comprises the detection of the predetermined downlink signal.
- wherein the trigger to activate the first synchronization mode comprises detecting an uplink grant for the at least one uplink signal.
- wherein the trigger to activate the first synchronization mode comprises receiving an indication of a clock time that corresponds to the ending boundary of a specific radio system frame at the network node.
- wherein the trigger to activate the first synchronization mode comprises receiving an explicit indication to activate the first synchronization mode.
- wherein the trigger to deactivate the first synchronization mode comprises obtaining a time advance value.
- wherein the trigger to deactivate the first synchronization mode comprises completing the detection of the predetermined downlink signal and the transmission of the at least one uplink signal.
- wherein the trigger to deactivate the first synchronization mode comprises expiration of a predetermined time duration after activating the first synchronization mode.
- wherein the trigger to deactivate the first synchronization mode comprises receiving an indication of a time that corresponds to the ending boundary of a specific radio system frame at the network node.
- wherein the trigger to deactivate the first synchronization mode comprises receiving an explicit indication to deactivate the first synchronization mode.
- wherein the configuration further comprises an indication of the predetermined downlink signal.
- wherein the configuration further comprises an indication of the at least one uplink signal for which the determined downlink timing is to be applied.
- wherein the configuration further comprises an indication of at least one uplink-downlink signal -pair for which the first synchronization mode is to be applied such that the downlink timing is determined based on the downlink signal of the uplink-downlink signal -pair and the determined downlink timing is applied on the uplink signal of the uplink-downlink signal -pair.
- wherein the predetermined time synchronization requirements which the user equipment is required to comply with while the first synchronization mode is activated are more stringent than while the first synchronization mode is deactivated.

According to a second aspect, there is provided a method, comprising determining a configuration for activation and deactivation of a first synchronization mode at a user equipment, wherein the first synchronization mode requires the user equipment to comply with predetermined time synchronization requirements between the user equipment and a network node; providing the configuration to the user equipment; transmitting a predetermined downlink signal to the user equipment for use while the user equipment is in the first synchronization mode; receiving at least one uplink signal from the user equipment, the reception of the at least one uplink signal being at least partially based on the trans-mitted predetermined downlink signal.

Various embodiments of the second aspect may comprise at least one feature from the following bulleted list:
- determining a time advance value at least partially based on the received at least one uplink signal; and providing the time advance value to the user equipment.
- determining channel condition between the network node and the user equipment; and deciding whether to enable activation of the first synchronization mode at the user equipment based on the determined channel conditions.
- deciding to enable early deactivation request of the first synchronization mode at the user equipment when a predetermined condition is met; and providing the user equipment with an indication that early deactivation request is allowed when the predetermined condition is met.

According to a third aspect, there is provided an apparatus, comprising: at least one processor and at least one memory including a computer program code, wherein the at least one memory and the computer program code are configured, with the at least one processor, to cause the apparatus to: receive a configuration for activation and deactivation of a first synchronization mode, wherein the first synchronization mode requires the apparatus to comply with predetermined time synchronization requirements between the apparatus and a network node; detect, based on the configuration, a trigger to activate the first synchronization mode, and activate the first synchronization mode; determine downlink timing based on a predetermined downlink signal from the network node while the first synchronization mode is activated; apply the determined downlink timing in transmitting at least one uplink signal; detect, based on the configuration, a trigger to deactivate the first synchronization mode, and deactivate the first synchronization mode. Various embodiments of the third aspect may comprise at least one feature from the bulleted list under the first aspect.

According to a fourth aspect, there is provided an apparatus, comprising: at least one processor and at least one memory including a computer program code, wherein the at least one memory and the computer program code are configured, with the at least one processor, to cause the apparatus to: determine a configuration for activation and deactivation of a first synchronization mode at a user equipment, wherein the first synchronization mode requires the user equipment to comply with predetermined time synchronization requirements between the user equipment and the apparatus; provide the configuration to the user equipment; transmit a predetermined downlink signal to the user equipment for use while the user equipment is in the first synchronization mode; receive at least one uplink signal from the user equipment, the reception of the at least one uplink signal being at least partially based on the transmitted predetermined downlink signal. Various embodiments of the fourth aspect may comprise at least one feature from the bulleted list under the second aspect.

According to a fifth aspect, there is provided a computer program product embodied on a distribution medium readable by a computer and comprising program instructions which, when loaded into an apparatus, execute the method according to the first aspect.

According to a sixth aspect, there is provided a computer program product embodied on a distribution medium readable by a computer and comprising program instructions which, when loaded into an apparatus, execute the method according to the second aspect.

According to a seventh aspect, there is provided a computer program product comprising program instructions which, when loaded into an apparatus, execute the method according to the first aspect.

According to an eight aspect, there is provided a computer program product comprising program instructions which, when loaded into an apparatus, execute the method according to the second aspect.

According to a ninth aspect, there is provided an apparatus, comprising means for performing the method according to the first aspect, and/or means configured to cause a user equipment to perform the method according to the first aspect.

According to a tenth aspect, there is provided an apparatus, comprising means for performing the method according to the second aspect, and/or means configured to cause a network node to perform the method according to the second aspect.

The means may comprise at least one processor and at least one memory including computer program code, the at least one memory and computer program code configured to, with the at least one processor, cause the performance of the apparatus.

According to an eleventh aspect, there is provided a computer system, comprising: one or more processors; at least one data storage, and one or more computer program instructions to be executed by the one or more processors in association with the at least one data storage for carrying out the method according to the first aspect and/or the method according to the second aspect.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus, comprising:
means for receiving (300) a configuration for activation and deactivation of a first synchronization mode, wherein the first synchronization mode requires the apparatus to comply with predetermined time synchronization requirements between the apparatus and a network node;
means for detecting (302), based on the configuration, a trigger to activate the first synchronization mode;
means for activating the first synchronization mode;
means for determining (304) downlink timing based on a predetermined downlink signal from the network node while the first synchronization mode is activated;
means for applying (306) the determined downlink timing in transmitting at least one uplink signal;
means for detecting (310), based on the configuration, a trigger to deactivate the first synchronization mode; and
means for deactivating the first synchronization mode.

2. The apparatus of claim 1, wherein activating the first synchronization mode comprises applying a time of arrival detection at least for the detection of the predetermined downlink signal with a higher downlink sampling rate than a downlink sampling rate used when the first synchronization mode is deactivated.

3. The apparatus of any preceding claim, wherein applying the determined downlink timing in the at least one uplink signal comprises determining uplink transmission time at least partly based on the determined downlink timing and a current time advance value.

4. The apparatus of any preceding claim, further comprising:
means for generating the at least one uplink signal during the first synchronization mode with a higher uplink sampling rate than an uplink sampling rate used when the first synchronization mode is deactivated.

5. The apparatus of any preceding claim, further comprising:
means for obtaining (308) a time advance value from the network node, wherein the obtained time advance value is at least partially based on the transmitted at least one uplink signal; and
means for updating the existing time advance value based on the obtained time advance value.

6. The apparatus of any preceding claim, further comprising:
means for gradually adjusting timing to comply with predetermined synchronization requirements of the first synchronization mode.

7. The apparatus of any preceding claim, wherein the predetermined downlink signal occupies a higher bandwidth than a synchronization signal block.

8. The apparatus of any preceding claim, wherein the predetermined downlink signal is one of a channel state information reference signal, a tracking reference signal, a positioning reference signal, or a demodulation reference signal, and wherein the at least one uplink signal comprises a sounding reference signal.

9. The apparatus of any preceding claim, further comprising:
means for determining the difference between the downlink timing obtained with the first synchronization mode and the downlink timing obtained when the first synchronization mode is deactivated; and
means for requesting deactivation of the first synchronization mode based on determining that the downlink timing obtained with the first synchronization mode is less than a predetermined threshold improved over the downlink timing obtained when the first synchronization mode is deactivated.

10. The apparatus of any preceding claim, wherein the trigger to activate the first synchronization mode comprises at least one of: detecting the predetermined downlink signal, detecting an uplink grant for the at least one uplink signal, receiving an indication of a clock time that corresponds to the ending boundary of a specific radio system frame at the network node, or receiving an explicit indication to activate the first synchronization mode.

11. The apparatus of any preceding claim, wherein the trigger to deactivate the first synchronization mode comprises at least one of obtaining a time advance value, completing the detection of the predetermined downlink signal and the transmission of the at least one uplink signal, expiration of a predetermined time duration after activating the first synchronization mode, receiving an indication of a time that corresponds to the ending boundary of a specific radio system frame at the network node, or receiving an explicit indication to deactivate the first synchronization mode.

12. The apparatus of any preceding claim, wherein the configuration further comprises at least one of an indication of the predetermined downlink signal, an indication of the at least one uplink signal for which the determined downlink timing is to be applied, or an indication of at least one uplink-downlink signal -pair for which the first synchronization mode is to be applied such that the downlink timing is determined based on the downlink signal of the uplink-downlink signal -pair and the determined downlink timing is applied on the uplink signal of the uplink-downlink signal -pair.

13. An apparatus, comprising:
means for determining (400) a configuration for activation and deactivation of a first synchronization mode at a user equipment, wherein the first synchronization mode requires the user equipment to comply with predetermined time synchronization requirements between the user equipment and the apparatus;
means for providing (402) the configuration to the user equipment;
means for transmitting (404) a predetermined downlink signal to the user equipment for use while the user equipment is in the first synchronization mode; and
means for receiving (406) at least one uplink signal from the user equipment, the reception of the at least one uplink signal being at least partially based on the transmitted predetermined downlink signal.

14. The apparatus of claim 13, further comprising:
means for determining (408) a time advance value at least partially based on the received at least one uplink signal; and
means for providing (410) the time advance value to the user equipment.

15. The apparatus of any of claims 13 to 14, further comprising:
means for determining channel condition between the apparatus and the user equipment; and
means for deciding whether to enable activation of the first synchronization mode at the user equipment based on the determined channel conditions.
